# EUROPEAN PATENT APPLICATION

(11) **EP 4 303 947 A1**
(43) Date of publication of application: **10.01.2024**
(21) Application number: 21928385.0
(22) Date of filing: 17.09.2021
(51) Int. Cl.: H01M 4/13, H01M 4/139, H01M 4/62, H01M 10/052

(54) **LITHIUM ION SECONDARY BATTERY AND METHOD FOR PRODUCING SAME**

(30) Priority: 05.03.2021 JP 2021035639
(71) Applicant: Vehicle Energy Japan Inc., Hitachinaka-shi Ibaraki 312-8505 (JP)
(72) Inventor: TACHIKAWA, Yusuke, Hitachinaka-shi, Ibaraki 312-8505 (JP); KUROKI, Yasutaka, Hitachinaka-shi, Ibaraki 312-8505 (JP); MIKI, Takeshi, Hitachinaka-shi, Ibaraki 312-8505 (JP)
(74) Representative: Strehl Schübel-Hopf & Partner
(86) International application number: PCT/JP2021/034340
(87) International publication number: WO 2022/185580

(57) **Abstract**

A purpose of the present invention is to provide a lithium ion secondary battery that can suppress the deterioration of the insulating property of a positive electrode insulating layer by preventing the material of the positive electrode insulating layer from sinking into a positive electrode active material layer. A lithium ion secondary battery according to the present invention is a lithium ion secondary battery including a positive electrode and a negative electrode that are laminated upon each other. The lithium ion secondary battery is characterized in that the positive electrode includes: a positive electrode foil; a positive electrode active material layer formed on a surface of the positive electrode foil; and a positive electrode insulating layer formed on a surface of the positive electrode active material layer, in which the positive electrode active material layer includes a positive electrode active material and a first nonaqueous binder, and the positive electrode insulating layer includes an inorganic filler, a second nonaqueous binder, and a dispersant.

## Description

### Technical Field

The present invention relates to lithium ion secondary batteries and methods for producing the same, and for example, relates to lithium ion secondary batteries used as power sources for hybrid vehicles, electric vehicles, and the like, and methods for producing the same.

### Background Art

In recent years, large-capacity secondary batteries used as power sources for hybrid vehicles, electric vehicles, and the like have been developed, and among them, lithium ion secondary batteries with high energy densities have attracted attention. In addition, from the viewpoint of reducing exhaust gases and emphasizing environmental performances, driving by electrifying automobiles is oriented. As a result, lithium ion secondary batteries are required to have higher energy densities and higher safety.

A lithium ion secondary battery generally has a basic configuration in which a positive electrode, a negative electrode, and a separator for electrically insulating the positive electrode and the negative electrode are formed, and the positive electrode and the negative electrode are laminated with the separator interposed therebetween. Each of the positive electrode and the negative electrode is generally a strip-shaped metal foil on which an active material layer is formed by applying a slurry containing an active material that can adsorb or desorb lithium ions to or from the surface of the strip-shaped metal foil. The positive electrode, the negative electrode and the separator are, for example, superimposed on each other and wound to form an electrode group. Furthermore, the electrode group is placed in a can or a laminate package while being impregnated with an electrolytic solution.

In the lithium ion secondary battery, the positive electrode and the negative electrode are insulated from each other by interposing a separator made of, for example, a porous film such as polyethylene or polypropylene between the positive electrode and the negative electrode. In recent years, in order to ensure higher safety, it is proposed that an insulating layer is formed on the surface of the active material layer of an electrode for the purpose of suppressing a voltage drop and an internal short circuit caused by contaminations and the like, or improving heat resistance performance.

For example, in PTL 1, a method is proposed, which is for producing a secondary battery that has an electrode in which an active material mixture layer is formed on an electrode foil and an insulating layer is formed on the active material mixture layer in order to further improve insulation reliability without impairing the performance of the active material mixture layer formed on the electrode and that includes a step of simultaneously applying an active material mixture slurry and an insulating layer dispersion liquid to the electrode foil to form the active material mixture layer and the insulating layer.

In addition, a secondary battery is proposed in PLT 2 in which, in order to prevent a secondary short circuit between a positive electrode and a negative electrode from occurring and improve safety by interposing a protective layer between the positive electrode and the negative electrode even when the secondary battery is in a high temperature state, a negative electrode protective layer (insulating layer) is formed on the surface of the negative electrode active material layer of the negative electrode, where the negative electrode protective layer includes an inorganic filler, a resin filler the melting point of which is higher than that of the separator, and a binder. In this secondary battery, when abnormal heat above the melting point of the separator is generated, the resin filler in the negative electrode protective layer is softened and exhibits the function of a second binder, which suppresses the movement of the inorganic filler. As a result, even if the separator shrinks due to the abnormal heat, the negative electrode protective layer can prevent a secondary short circuit between the positive electrode and the negative electrode from occurring, which leads to the improvement of safety.

Furthermore, a method is proposed in PTL 3, which is for producing a positive electrode for a lithium ion secondary battery in which, when an insulating heat resistant layer (insulating layer) is formed on the surface of the active material layer of the positive electrode by a method using an insulating heat resistant layer paste containing an insulating heat resistant material and an aqueous solvent (water or a solvent containing water or water and a polar organic solvent), in order to suppress the occurrence of defects in the insulating heat resistant layer, after a hydrophilic conductive material layer is formed by attaching the powder of a hydrophilic conductive material to the surface of a positive electrode composite layer and the insulating heat resistant layer is formed by applying the insulating heat resistant layer paste to the surface of a hydrophilic conductive material layer, the positive electrode composite layer and the hydrophilic conductive material layer are dried.

### Citation List

### Patent Literature

PTL 1: Domestic Re-publication of PCT International Publication for Patent Application No. 2019-008827
PTL 2: Domestic Re-publication of PCT International Publication for Patent Application No. 2017-038327
PTL 3: Japanese Patent Application Laid-Open No. 2019-169416

### Summary of Invention

### Technical Problem

In conventional methods for producing lithium ion secondary batteries, in the case where a positive electrode active material layer slurry containing a nonaqueous solvent and a positive electrode insulating layer slurry containing an aqueous solvent are applied to the surface of a positive electrode foil so as to overlap each other and both applied slurries are dried simultaneously in order to form a positive electrode insulating layer on the surface of a positive electrode active material layer for the purpose of suppressing a voltage drop and an internal short circuit caused by contaminations and the like, or for the purpose of improving heat resistance performance and the like, it has been difficult to the nonaqueous solvent and the aqueous solvent are separated from each other and recovered individually in the drying process. As a result, there is a problem in that these solvents cannot be efficiently recycled. On the other hand, in the case where both positive electrode active material layer slurry and positive electrode insulating layer slurry containing nonaqueous solvents are applied so as to overlap each other on the surface of the positive electrode foil, and both applied slurries are dried at the same time in order to solve such a problem, there has been a possibility that the material of the positive electrode insulating layer sinks into the positive electrode active material layer and the insulating property of the positive electrode insulating layer deteriorates.

The present invention has been achieved with the above problem borne in mind, and the main object of the present invention is to provide a lithium ion secondary battery that can suppress the deterioration of the insulating property of a positive electrode insulating layer by preventing the material of the positive electrode insulating layer from sinking into a positive electrode active material layer, and a method for producing the lithium ion secondary battery.

### Solution Problem

In order to solve the abovementioned problem, a lithium ion secondary battery according to the present invention includes a positive electrode and a negative electrode, and the positive electrode and the negative electrode are laminated upon each other. The lithium ion secondary battery is characterized in that the positive electrode includes: a positive electrode foil; a positive electrode active material layer formed on a surface of the positive electrode foil; and a positive electrode insulating layer formed on a surface of the positive electrode active material layer. The positive electrode active material layer includes a positive electrode active material and a first nonaqueous binder, and the positive electrode insulating layer includes an inorganic filler, a second nonaqueous binder, and a dispersant.

The lithium ion secondary battery according to the present invention can suppress the deterioration of the insulating property of the positive electrode insulating layer by preventing the material of the positive electrode insulating layer from sinking into the positive electrode active material layer.

In addition, a method for producing the lithium ion secondary battery according to the present invention is characterized in that the method includes the steps of: preparing a positive electrode foil; preparing a positive electrode active material layer slurry by mixing a positive electrode active material, a first nonaqueous binder, and a first nonaqueous solvent; preparing a positive electrode insulating layer slurry by mixing an inorganic filler, a second nonaqueous binder, a dispersant, and a second nonaqueous solvent; applying the positive electrode active material layer slurry to a surface of the positive electrode foil; applying the positive electrode insulating layer slurry to a surface of the positive electrode active material layer slurry applied to the surface of the positive electrode foil; and simultaneously drying the applied positive electrode active material layer slurry and the applied positive electrode insulating layer slurry.

The method for producing the lithium ion secondary battery according to the present invention can suppress the deterioration of the insulating property of the positive electrode insulating layer by preventing the material of the positive electrode insulating layer from sinking into the positive electrode active material layer.

The present specification includes the disclosure contents of Japanese Patent Application No. 2021-035639 that is the basis of the priority of this application.

### Advantageous Effects of Invention

According to the present invention, the deterioration of the insulating property of the positive electrode insulating layer can be suppressed by preventing the material of the positive electrode insulating layer from sinking into the positive electrode active material layer.

Problems, configurations, and advantageous effects related to the present invention other than the contents that have been described so far will be explicitly shown by the descriptions of the following embodiment and example for achieving the present invention.

### Brief Description of Drawings

Figure 1 is an appearance perspective view showing the outline of a flat wound secondary battery that is a lithium ion secondary battery according to one embodiment.
Figure 2 is an exploded perspective view showing the outline of the components of the flat wound secondary battery shown in Figure 1.
Figure 3 is an exploded perspective view showing the outline of the expanded state of a part of an electrode winding group shown in Figure 2.
Figure 4(a) is a cross-sectional view schematically showing the configuration of a positive electrode shown in Figure 3 before being cut, and Figure 4(b) is a plan view schematically showing the configuration of a positive electrode shown in Figure 3 before being cut.

### Description of Embodiments

Hereinafter, embodiments related to a lithium ion secondary battery and a method for producing the same according to the present invention will be described with reference to the accompanying drawings and the like. The following descriptions shows the concrete examples about the contents of the present invention, and the present invention is not limited to these descriptions, so that various alternations and modifications can be made by those skilled in the art within the scope of technical ideas disclosed in the present specification. Furthermore, in all the drawings used for explaining the present invention, components that have the same function are given the same reference signs, and repetitive explanations thereof will be omitted in some cases.

In the present specification, "~" is used to include the numerical values before and after "∼" as a lower limit value and an upper limit value respectively. In the numerical ranges described in a stepwise manner in the present specification, an upper limit value or a lower limit value described in one numerical range may be replaced with an upper limit value or a lower limit value described in another stepwise manner. An upper limit value or a lower limit value of a numerical range described in the present specification may be replaced with values shown in examples.

When selecting a material from a material group exemplified below, the material may be selected singly or may be selected as a combination of any plural materials as long as the selection is not inconsistent with contents disclosed in the present specification. In addition, a material may be selected from a material group other than the material group exemplified below as long as the selection is not inconsistent with the contents disclosed in the present specification.

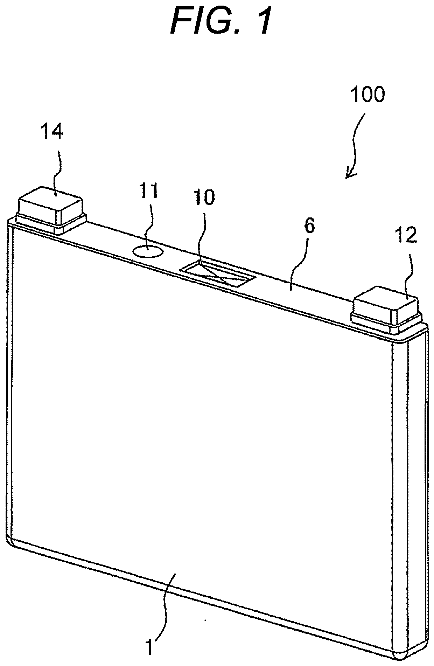

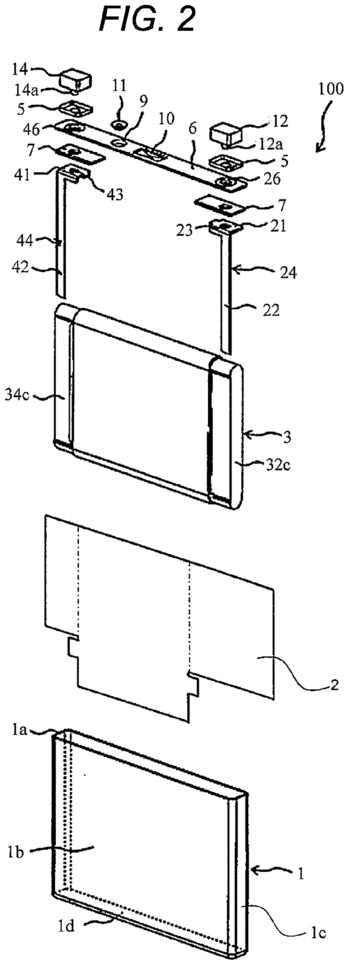

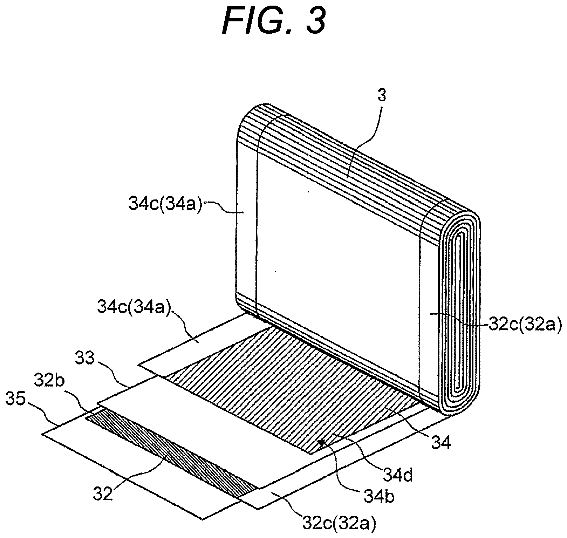

First, as one of the outlines of lithium ion secondary batteries related to embodiments, a lithium ion secondary battery according to one embodiment will be described as an example. Here, Figure 1 is an appearance perspective view showing the outline of a flat wound secondary battery that is a lithium ion secondary battery according to the one embodiment. Figure 2 is an exploded perspective view showing the outline of the components of the flat wound secondary battery shown in Figure 1. Figure 3 is an exploded perspective view showing the outline of the expanded state of a part of an electrode winding group shown in Figure 2.

As shown in Figure 1 and Figure 2, the flat wound secondary battery 100 includes a battery can 1 and a battery cover (lid) 6. The battery can 1 has a rectangular bottom surface 1d, two side surfaces 1b and two side surfaces 1c that form a rectangular tube, and an opening 1a that is opened upward at the upper end of the rectangular tube. Two side surfaces 1b and the two side surfaces 1c form a pair of wide side surfaces 1b each having a relatively large area and a pair of narrow side surfaces 1c each having a relatively small area respectively. A winding group 3 is housed in the battery can 1 with an insulating protective film 2 therebetween. The battery cover 6 has an approximately rectangular flat plate shape, and the battery cover 6 is welded so as to close the opening 1a present at the top of the battery can 1. Thereby, the battery can 1 is sealed.

A positive electrode external terminal 14 and a negative electrode external terminal 12 are provided on the battery cover 6, and a gas discharge valve 10 is integrally provided. In the flat wound secondary battery 100, the winding group 3 is charged via the positive electrode external terminal 14 and the negative electrode external terminal 12, thereby an external load is provided with electric power. Furthermore, when a pressure inside the battery can 1 rises, the gas discharge valve 10 is opened and a gas is discharged from the inside of the battery can 1, and the pressure inside the battery can 1 is reduced. Thereby, the safety of the flat wound secondary battery 100 is ensured.

As shown in Figure 2 and Figure 3, since the winding group 3 is wound in a flat shape, the winding group 3 has a pair of opposing curved portions each having a semicircular cross section and a flat portion continuously formed between the pair of opposing curved portions. The winding group 3 is inserted into the battery can 1 from one curved portion side of the winding group 3 so that the winding axis direction is along the width direction of the battery can 1, and the other curved portion side is disposed on the upper opening portion 1a side of the battery can 1.

The positive electrode foil exposed portion 34c of the winding group 3 is electrically connected to the positive electrode external terminal 14 provided on the battery cover 6 via a positive electrode current collection plate (current collection terminal) 44. In addition, the negative electrode foil exposed portion 32c of the winding group 3 is electrically connected to the negative electrode external terminal 12 provided on the battery cover 6 via a negative electrode current collection plate (current collection terminal) 24. As a result, electric power is supplied from the winding group 3 to an external load via the positive electrode current collection plate 44 and the negative electrode current collection plate 24, and externally generated electric power is supplied to the winding group 3 via the positive electrode current collecting plate 44 and the negative electrode current collecting plate 24 to charge the winding group 3.

Gaskets 5 and insulating plates 7 are provided on the battery cover 6 in order to electrically insulate the positive electrode external terminal 14, the negative electrode external terminal 12, the positive electrode current collection plate 44, and the negative electrode current collection plate 24 from the battery cover 6. The battery cover 6 is provided with a solution injection port 9 for injecting an electrolytic solution into the inside of the battery can 1 by perforation. In the flat wound secondary battery 100, after the electrolytic solution is injected into the inside of the battery can 1 via the solution injection port 9, the solution injection port 9 is sealed by jointing a solution injection plug 11 to the battery cover 6 by laser welding. Thereby, the flat wound secondary battery 100 is hermetically sealed.

The positive electrode external terminal 14 and the negative electrode external terminal 12 have weld joint portions that are welded to a bus bar or the like. Each of the weld joint portions has a rectangular solid block shape that protrudes upward from the surface of the battery cover 6, the lower surface of each weld joint portion faces the surface of the battery cover 6, and the upper surface is parallel to the surface of the battery cover 6 at a predetermined height position.

A positive electrode connection portion 14a and a negative electrode connection portion 12a protrude from the lower surface of the weld joint portion of the positive electrode external terminal 14 and the lower surface of the weld joint portion of the negative electrode external terminal 12 respectively, and their tips have cylindrical shapes that can be inserted into the positive electrode side through hole 46 and the negative electrode side through hole 26 of the battery cover 6 respectively. The positive electrode connection portion 14a and the negative electrode connection portion 12a pass through the battery cover 6 and extend into the inside of the battery can 1 while passing through the positive electrode current collection plate base 41 of the positive electrode current collection plate 44 and the negative electrode current collection plate base 21 of the negative electrode current collection plate 24 respectively, and the tip of the positive electrode connection portion 14a is crimped to integrally fix the positive electrode external terminal 14 and the positive electrode current collection plate 44 to the battery cover 6, and similarly the tip of the negative electrode connection portion 12a is crimped to integrally fix the negative electrode external terminal 12 and the negative electrode current collection plate 24 to the battery cover 6. The gaskets 5 are interposed between the battery cover 6 and the positive electrode external terminal 14 and between the battery cover 6 and the negative electrode external terminal 12 respectively, and the insulating plates 7 are interposed between the battery cover 6 and the positive electrode current collection plate 44 and between the battery cover 6 the negative electrode current collection plate 24 respectively.

The positive electrode current collection plate 44 includes: a rectangular positive electrode current collection plate base 41 that is disposed to face the lower surface of the battery cover 6; and a positive electrode side connection end portion 42 that is bent at the side end of the positive electrode current collection plate base 41, extending toward the bottom surface side of the battery can 1 along the wide side surfaces 1b of the battery can 1, and connected to the positive electrode foil exposed portion 34c of the winding group 3 in a state of facing and overlapping the positive electrode foil exposed portion 34c, and similarly the negative electrode current collection plate 24 includes a negative electrode current collection plate base 21 that is disposed to face the lower surface of the battery cover 6; and a negative electrode side connection end portion 22 that is bent at the side end of the negative electrode current collection plate base 21, extending toward the bottom surface side of the battery can 1 along the wide side surfaces 1b of the battery can 1, and connected to the negative electrode foil exposed portion 32c of the winding group 3 in a state of facing and overlapping the negative electrode foil exposed portion 32c.

The positive electrode current collection plate base 41 and the negative electrode current collection plate base 21 are provided with a positive electrode side opening hole 43 and a negative electrode side opening hole 23 through which the positive electrode connection portion 14a and the negative electrode connection portion 12a are inserted respectively.

The insulating protective film 2 is wounded around the winding group 3 with a direction that is along the flat surface of the winding group 3 and orthogonal to the winding axis direction of the winding group 3 as the central axis direction of the winding. The insulating protective film 2 is not particularly limited, and a common insulating protective film can be used. For example, the insulating protective film 2 is composed of a single sheet or a plurality of film members made of synthetic resin such as PP (polypropylene). The insulating protective film 2 is long enough to be wounded with a direction along the flat surface of the winding group 3 and orthogonal to the winding axis direction of the winding group 3 as the central axis direction of the winding.

As shown in Figure 3, the winding group 3 is configured by interposing separators 33 and 35 between a positive electrode 34 and a negative electrode 32 and winding the positive electrode 34, the negative electrode 32, and the separators 33 and 35 in a flat shape. In the winding group 3, the outermost electrode is the negative electrode 32, and the separator 35 is wound around the outer peripheral side of the outermost negative electrode 32.

The separators 33 and 35 each has an insulating function to prevent a short circuit between the positive electrode 34 and the negative electrode 32, and also has a function of retaining a nonaqueous solution.

The portions of the negative electrode 32 to which a negative electrode active material layers 32b are applied are larger than the portions of the positive electrode 34 to which positive electrode active material layers 34b are applied in the width direction (winding axis direction). Thus, the winding group 3 is configured in such a way that the entirety of the portions to which the positive electrode active material layers 34b are applied is sandwiched between the portions to which the negative electrode active material layers 32b are applied. The positive electrode foil exposed portion 34c and the negative electrode foil exposed portion 32c are respectively bundled at the plane portion of the winding group 3 and connected by welding or the like. Here, although the separators 33 and 35 are wider in the width direction than the portions to which the negative electrode active material layers 32b are applied, the separators 33 and 35 are wound respectively at positions where metal foil surfaces at the end portions of the positive electrode foil exposed portion 34c and the negative electrode foil exposed portion 32c are exposed. Therefore, the separators 33 and 35 do not interfere with the bundling and welding.

As shown in Figure 3, the negative electrode 32 includes a negative electrode foil 32a and the negative electrode active material layers 32b formed on both surfaces of the negative electrode foil 32a.

After the negative electrode active material layers 32b are formed by applying a slurry, which is prepared by dispersing a negative electrode active material and a binder as a binding agent in an appropriate solvent (e.g., water, N-methyl-2-pyrrolidone, etc.) and by kneading the solvent, on both surfaces of the negative electrode foil 32a and by removing the solvent by drying the slurry applied to both surfaces of the negative electrode foil 32a, the negative electrode 32 can be produced by further pressbonding the negative electrode foil 32a and the negative electrode active material layers 32b using a pressing machine so that the negative electrode 32 has an appropriate thickness.

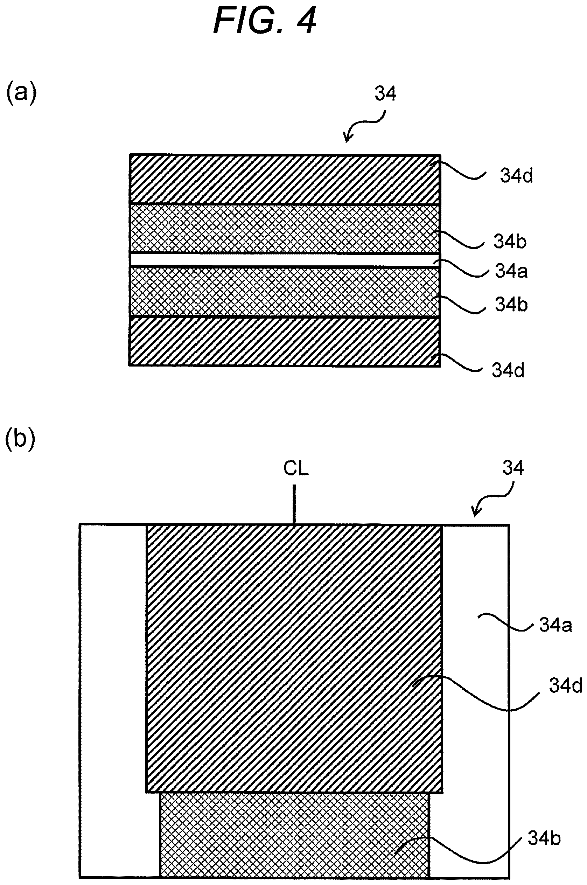

Here, Figure 4(a) is a cross-sectional view schematically showing the configuration of the positive electrode shown in Figure 3 before being cut, and Figure 4(b) is a plan view schematically showing the configuration of the positive electrode shown in Figure 3 before being cut.

As shown in Figure 3 and Figure 4(a), the positive electrode 34 includes: the positive electrode foil 34a; the positive electrode active material layers 34b formed on both surfaces of the positive electrode foil 34a respectively; and the positive electrode insulating layers 34d formed so as to cover the surfaces of both positive electrode active material layers 34b respectively. The positive electrode insulating layers 34d face the negative electrode active material layers 32b of the negative electrode 32.

Figure 4(b) shows a portion of one of the positive electrode active material layers 34b that is not covered with one of the positive electrode insulating layers 34d when the positive electrode 34 is seen in a plan view. A positive electrode that is actually used is configured in such a way that the entire surface of the portion of the positive electrode where the positive electrode active material layer is formed is covered with the insulating layer when the positive electrode is seen in a plan view. As shown in Figure 4(b), the positive electrode 34 is in a state before being cut, and the positive electrode 34 is cut along a center line CL in the width direction so as to be divided into two to form two pieces of positive electrodes 34 on both sides in the width direction.

The positive electrode active material layer 34b includes a positive electrode active material and a first nonaqueous binder. The positive electrode insulating layer 34d includes an organic filler, a second nonaqueous binder, and a dispersant. The dispersant includes at least one selected from a group of carboxylic acid compounds and phosphoric acid compounds.

The positive electrode active material layers 34b and the positive electrode insulating layers 34d are formed respectively by simultaneously applying a positive electrode active material layer slurry and a positive electrode insulating layer slurry to both surfaces of the positive electrode foil 34a. Here, "simultaneously applying" includes the case where the positive electrode active material layer slurry and the positive electrode insulating layer slurry are overlapped each other in a layered state in advance, and both slurries with the layered state intact are applied to the positive electrode foil 34a, and further includes the case where the positive electrode active material layer slurry is applied to the positive electrode foil 34a first, and the positive electrode insulating layer is applied to the positive electrode active material layer slurry when the surfaces of the positive electrode active material layer slurry in a wet state, that is, before the surfaces are dried.

As described above, in the flat wound secondary battery 100, which is the lithium ion secondary battery according to the one embodiment, the positive electrode 34 includes: the positive electrode foil 34a; the positive electrode active material layers 34b formed on the surfaces of the positive electrode foil 34a; and the positive electrode insulating layers 34d formed on the surfaces of the positive electrode active material layers 34b, and each of the positive electrode active material layers 34b includes the positive electrode active material and the first nonaqueous binder, and each of the positive electrode insulating layers 34d includes the inorganic filler, the second nonaqueous binder, and the dispersant. Therefore, at the time of producing the flat wound secondary battery 100, by applying the positive electrode active material layer slurry and the positive electrode insulating layer slurry both containing nonaqueous solvents to the surfaces of the positive electrode foil 34a in such a way that both slurries overlap each other, and by drying both slurries at the same time, the materials such as the inorganic filler can be dispersed in the applied positive electrode insulating layer slurry with the dispersant when the positive electrode active material layers 34b and the positive electrode insulating layers 34d are formed. Thereby, the materials such as the inorganic filler applied to the positive electrode insulating layers 34d are prevented from sinking into the positive electrode active material layers 34b. As a result, the deterioration of the insulating properties of the positive electrode insulating layers 34d can be suppressed. Furthermore, when the applied positive electrode active material layer slurry and the applied positive electrode insulating layer slurry are dried at the same time, so that the nonaqueous solvents can be recovered from both slurries respectively and can be recycled, cost reduction can be achieved.

Next, the details of the configuration of the lithium ion secondary battery and the method for producing the same according to the embodiment will be described.

### 1. Positive Electrode

The positive electrode includes a positive electrode foil, positive electrode active material layers formed on the surfaces of the positive electrode foil, and positive electrode insulating layers formed on the surfaces of the positive electrode active material layers.

### (1) Positive Electrode Foil

The positive electrode foil is not particularly limited, and an aluminum foil, a perforated aluminum foil, a foamed aluminum plate, or the like can be used as the positive electrode foil.

### (2) Positive Electrode Active Material Layer

The positive electrode active material layer includes a positive electrode active material and a first nonaqueous binder.

The positive electrode active material is not particularly limited, and one or a mixture of two or more materials applicable as the positive electrode active material for lithium secondary batteries can be used, and for example, a spinel-based material (e.g., LiMn₂O₄, or the like), a layered material (e.g., LiCoO₂, LiNiO₂, or the like), an olivine-based material (e.g., LiFePO₄, or the like), or a mixture of two or more of them is preferable as the positive electrode active material. Among them, layered lithium-nickel-cobalt-manganese composite oxides containing Li, Ni, Co, and Mn as constituent elements (for example, LiNi_{0.33} Co_{0.33} Mn_{0.33}O₂, and the like) are more preferable. This is because the lattice volume of a layered lithium-nickel-cobalt-manganese composite oxide hardly changes due to charging and discharging until the amount of desorbed lithium ions is increased to two-thirds of the amount of original lithium ions included in the positive electrode active material, thereby the durability thereof is excellent.

The first nonaqueous binder is not particularly limited as long as it is a binder that disperses or dissolves in a nonaqueous solvent that is an organic solvent. For example, it is preferable that the first nonaqueous binder includes at least one selected from a group of polyvinylidene fluoride (PVDF), polytetrafluoroethylene (PTFE), polyacrylic acid (PAA), and carboxymethyl cellulose (CMC).

Furthermore, each component contained in the positive electrode active material layer and the content of each component can be confirmed or measured using a spectral analysis such as infrared spectroscopy (IR), a chromatographic analysis such as gas chromatography mass spectrometry (Py-GC/MS), or the like.

### (3) Positive Electrode Insulating Layer

The positive electrode insulating layer contains an inorganic filler, a second nonaqueous binder, and a dispersant.

The inorganic filler is not particularly limited, and a common inorganic filler can be used. For example, an inorganic filler containing at least one selected from a group of alumina (Al₂O₃), boehmite (Al₂O₃ hydrate), magnesia (MgO), zirconia (ZrO₂), titania (TiO₂), iron oxide, silica (SiO₂), and barium titanate (BaTiO₂) can be used as the above inorganic filler, and in addition, an inorganic filler including at least one selected from a group of alumina, boehmite, magnesia, zirconia, and titania is preferable.

The second nonaqueous binder is not particularly limited as long as it is a binder that disperses or dissolves in a nonaqueous solvent that is an organic solvent. For example, it is preferable that the second nonaqueous binder includes at least one selected from a group of polyvinylidene fluoride (PVDF), polytetrafluoroethylene (PTFE), polyacrylic acid (PAA), and carboxymethyl cellulose (CMC). Here, the nonaqueous solvent is not particularly limited as long as it is an organic solvent, and for example, it is preferable that the nonaqueous solvent is N-methyl-2-pyrrolidone (NMP) or the like.

The dispersant is not particularly limited, but it is preferable that the dispersant includes at least one selected from a group of carboxylic acid compounds and phosphoric acid compounds. This is because, when a carboxylic acid compound or a phosphoric acid compound is mixed with a material such as an inorganic filler as a dispersant in a nonaqueous solvent, negative ions such as COO⁻ ions are generated, for example, and these ions repel charges due to the polarity of the surface of the inorganic filler in the nonaqueous solvent, and the inorganic filler disperses, so that the sinking of the inorganic filler can be effectively suppressed.

Here, the term "a carboxylic acid compound" means a compound having one or more carboxy groups. Furthermore, carboxy groups may form salts respectively.

In addition, the term "a phosphate compound" means a compound having one or more polar functional groups represented by *-O-P (=O) (OR') (OR' ') . In the above expression, * represents a bond with another structural moiety in the phosphate compound. R' and R' ' each independently represents a hydrogen atom or a monovalent organic group. Furthermore, the polar functional group represented by the above expression may form a salt.

The content of the second nonaqueous binder with respect to the total content of the inorganic filler and the second nonaqueous binder in the positive electrode insulating layer is not particularly limited, but it is preferable that the content is, for example, in the range of 0.1 wt% or more and 10.0 wt% or less, and in addition, it is more preferable that the content is in the range of 0.2 wt% or more and 1.5 wt% or less. This is because when the content is equal to or more than the lower limits of these ranges, the durability of the positive electrode insulating layer can be made excellent, and when the content is equal to or less than the higher limits of these ranges, a short circuit between the positive electrode and the negative electrode can be effectively suppressed.

The content of the dispersant with respect to the total content of the inorganic filler and the dispersant in the positive electrode insulating layer is not particularly limited, but it is preferable that the content is, for example, in the range of 0.5 wt% or more and 10.0 wt% or less, and in addition, it is more preferable that the content is in the range of 1.3 wt% or more and 5.0 wt% or less. This is because when the content is equal to or more than the lower limits of these ranges, the inorganic filler can be appropriately dispersed due to the dispersant, and the sinking of the inorganic filler into the positive electrode active material layer can be effectively suppressed, and when the content is equal to or less than the higher limits of these ranges, a short circuit between the positive electrode and the negative electrode can be effectively suppressed.

Furthermore, each component contained in the positive electrode insulating layer and the content of each component can be confirmed or measured using a chromatographic analysis such as gas chromatography mass spectrometry (Py-GC/MS).

### 2. Negative Electrode

The negative electrode is not particularly limited, and includes, for example, a negative electrode foil, and negative electrode active material layers formed on the surfaces of the negative electrode foil.

### (1) Negative Electrode Foil

The negative electrode foil is not particularly limited, and for example, a copper foil, a copper perforated foil, a foamed copper plate, or the like can be used.

### (2) Negative electrode Active Material Layer

Each of the negative electrode active material layers is not particularly limited, but, for example, it includes a negative electrode active material and a binder.

The negative electrode active material is not particularly limited, and a common material can be used. For example, a carbon material such as natural graphite, artificial graphite, hardly graphitizable carbon (hard carbon), or easily graphitizable carbon (soft carbon) can be used as the negative electrode active material. As for the graphite, by coating the surface of the graphite with amorphous carbon, it becomes possible to prevent the graphite from reacting to an electrolytic solution more than necessary.

As the negative electrode active material, a material obtained by mixing graphite with carbon black such as acetylene black, Ketjen black, channel black, furnace black, lamp black, or thermal black as a conductive auxiliary agent; a material complicated by further coating the material, which is mixed with the conductive auxiliary agent, with amorphous carbon; or a material obtained by mixing graphite with graphitizable carbon (hard carbon), graphitizable carbon (soft carbon), or metal oxides (e.g., iron oxide, copper oxide, or the like) can be used.

The binder is not particularly limited, and a common binder can be used. For example, styrene-butadiene rubber, carboxymethylcellulose, polyvinylidene fluoride (PVDF), and the like can be used as the binder.

### (3) Others

It is preferable that the negative electrode further has negative electrode insulating layers formed on the surfaces of the negative electrode active material layers. Each of the negative electrode insulating layers is not particularly limited, and for example, includes an inorganic filler and a binder. Here, if the negative electrode further includes the negative electrode insulating layers, the positive electrode insulating layers of the positive electrode face the negative electrode insulating layers of the negative electrode.

### 3. Lithium Ion Secondary Battery

The lithium ion secondary battery includes a positive electrode and a negative electrode, and the positive electrode and the negative electrode are laminated upon each other. The lithium ion secondary battery is characterized in that the positive electrode includes: a positive electrode foil; positive electrode active material layers formed on the surfaces of the positive electrode foil; and positive electrode insulating layers formed on the surfaces of the positive active electrode material layers, and the positive electrode active material layers include positive electrode active materials and first nonaqueous binders, and the positive electrode insulating layers include: inorganic fillers; second nonaqueous binders; and dispersants.

The lithium ion secondary battery is not particularly limited, and it is preferable that the lithium ion secondary battery further includes separators, and the positive electrode and the negative electrode are laminated with the separators interposed therebetween.

The separators 33 and 35 are not particularly limited, and common separators can be used, and for example, separators having porous sheets made of resins such as polyethylene (PE), polypropylene (PP), polyester, cellulose, and polyamide can be used as the separators 33 and 35. Each of the resin porous sheets may have a single-layer structure or a multi-layer structure (for example, a threelayer structure of PP/PE/PP, or the like). It is preferable that each of the separators 33 and 35 further has a layer made of an inorganic material (for example, alumina particles or the like) formed on one side or both sides of a main body made of a resin porous sheet or the like and a binder. As a result, even when the lithium secondary battery is used under abnormal conditions (for example, when the temperature of the secondary battery rises to 160 °C or higher due to overcharging or crushing), a melting phenomenon does not occur and the insulation function of the lithium secondary battery is maintained, so that the safety thereof can be ensured.

The lithium ion secondary battery usually has an electrolyte layer. The electrolyte layer is, for example, an electrolytic solution that is injected to the inside of the battery can. The electrolytic solution is not particularly limited, and a common electrolytic solution can be used. For example, a nonaqueous solution that is a carbonic ester-based organic solvent, such as an ethylene carbonate-based solution, in which a lithium salt such as lithium hexafluorophosphate (LiPF₆) is dissolved, and the like can be used.

The lithium ion secondary battery may include: a positive electrode external terminal; a positive electrode current collection plate; a negative electrode external terminal; and a negative electrode current collection plate. A material constituting the positive electrode external terminal and the positive electrode current collection plate is not particularly limited and a common material can be used, and for example an aluminum alloy or the like can be used. A material constituting the negative electrode external terminal and the negative electrode current collection plate is not particularly limited and a common material can be used, and for example a copper alloy or the like can be used.

The lithium ion secondary battery may include an insulating plate and a gasket. A material constituting the insulating plate 7 and the gasket 5 is not particularly limited, and a common material can be used. For example, an insulating resin material such as polybutylene terephthalate, polyphenylene sulfide, or perfluoroalkoxy fluorine resin can be used.

### 4. Method for Producing Lithium Ion Secondary Battery

A method for producing a lithium ion secondary battery includes the steps of: preparing a positive electrode foil; preparing a positive electrode active material layer slurry by mixing a positive electrode active material, a first nonaqueous binder, and a first nonaqueous solvent; preparing a positive electrode insulating layer slurry by mixing an inorganic filler, a second nonaqueous binder, a dispersant, and a second nonaqueous solvent; applying the positive electrode active material layer slurry to the surface of the positive electrode foil; applying the positive electrode insulating layer slurry to the surface of the positive electrode active material layer slurry applied to the surface of the positive electrode foil; and simultaneously drying the applied positive electrode active material layer slurry and the applied positive electrode insulating layer slurry. By using this method for producing a lithium ion secondary battery, a lithium ion secondary battery is produced.

The first nonaqueous solvent included in the positive electrode active material layer slurry is not particularly limited as long as it is an organic solvent, and for example, it is preferable that N-methyl-2-pyrrolidone (NMP) or the like is used as the first nonaqueous solvent.

The positive electrode active material and the first nonaqueous binder included in the positive electrode active material layer slurry are the same as the positive electrode active material and the first nonaqueous binder included in the positive electrode active material layer respectively, so that explanations thereabout will be omitted.

The second nonaqueous solvent included in the positive electrode insulating layer slurry is not particularly limited as long as it is an organic solvent, and for example, it is preferable that N-methyl-2-pyrrolidone (NMP) or the like is used as the second nonaqueous solvent.

The inorganic filler, the second nonaqueous binder, and the dispersant included in the positive electrode insulating layer slurry are the same as the inorganic filler, the second nonaqueous binder, and the dispersant included in the positive electrode insulating layer respectively, so that explanations thereabout will be omitted.

It is preferable that the same solvent is used for the positive electrode active material layer slurry and the positive electrode insulating layer slurry. This is because slurries can be efficiently recycled.

### Example

Hereinafter, the present invention will be described more specifically in the process of describing an example and a comparative example, but the technical scope of the present invention is not limited to these examples.

### <Example>

A positive electrode according to the present invention was produced. Specifically, first, an aluminum foil (positive electrode foil) with its thickness of 15 µm was prepared.

Next, Li_{1.0}Ni_{0.33}Co_{0.33}Mn_{0.33}O₂ powder (positive electrode active material), polyvinylidene fluoride (PVDF) (first nonaqueous binder), and acetylene black (conductive auxiliary agent) were mixed at a weight ratio of 90:5:5. The mixture was mixed with N-methyl-2-pyrrolidone (NMP) (first nonaqueous solvent) to adjust the viscosity, thereby preparing a positive electrode active material layer slurry.

Next, boehmite (inorganic filler), polyvinylidene fluoride (PVDF) (second nonaqueous binder), and a dispersant with its structure having a carboxyl group were mixed at a weight ratio of 98:1:1. The mixture was mixed with N-methyl-2-pyrrolidone (NMP) (second non-aqueous solvent) to adjust the viscosity, thereby preparing a positive electrode insulating layer slurry.

Next, the positive electrode active material layer slurry was applied to both surfaces of the aluminum foil so that uncoated portions (positive electrode foil exposed portions) remained. Next, the positive electrode insulating layer slurry was applied to the surfaces of liquid positive electrode active material layer slurries applied to both surfaces of the aluminum foil.

Next, the applied liquid positive electrode active material layer slurries and the applied liquid positive electrode insulating layer slurries were simultaneously dried. As a result, positive electrode active material layers and positive electrode insulating layers were formed, and a laminate was obtained in which the positive electrode active material layers and the positive electrode insulating layers were laminated in this order on both surfaces of the aluminum foil.

Next, the laminate composed of the aluminum foil, the positive electrode active material layers, and the positive electrode insulating layers was pressed and further cut to produce a positive electrode including the positive electrode active material layers and the positive electrode insulating layers formed by simultaneous coating.

### <Comparative Example>

First, an aluminum foil (positive electrode foil) was prepared in the same manner as in the example, and a positive electrode active material layer slurry and a positive electrode insulating layer slurry were prepared.

Next, the positive electrode active material layer slurry was applied to both surfaces of the aluminum foil so that uncoated portions (positive electrode foil exposed portions) remained. Next, the applied positive electrode active material layer slurry was dried to form positive electrode active material layers.

Next, the positive electrode insulating layer slurry was applied to the surfaces of the positive electrode active material layers formed on both surfaces of the aluminum foil. Next, positive electrode insulating layers were formed by drying the applied positive electrode insulating layer slurry. As a result, a laminate was obtained in which the positive electrode active material layers and the positive electrode insulating layers were laminated in this order on both surfaces of the aluminum foil.

Next, in the same manner as in the example, the laminate composed of the aluminum foil, the positive electrode active material layers, and the positive electrode insulating layers was pressed and further cut to produce a positive electrode including the positive electrode active material layers and the positive electrode insulating layers formed by sequential coating.

### <Appearance Observation>

In the production of the positive electrode using the dispersant in the positive electrode insulating layer of the example, after the positive electrode active material layer slurry was applied to both surfaces of the aluminum foil and before the positive electrode active material layer slurry was dried, the positive electrode insulating layer slurry was applied to the surfaces of the liquid positive electrode active material layer slurries. After that, an appearance observation was conducted for determining whether or not the inorganic fillers of the positive electrode insulating layers sink into the positive electrode active material layers.

As a result, although not shown, in the positive electrode of the example, the inorganic fillers of the positive electrode insulating layers did not sink into the positive electrode active material layers.

The present invention is not limited to the above embodiment and above example, any of embodiments or examples having substantively same configurations as and similar advantageous effects to the technical ideas described by the appended claims of the present invention is included in the technical scope of the present invention, and various modifications are also included. For example, the above embodiment and the above example have been described in detail in order to explain the present invention in an easily understood manner, and the present invention is not necessarily limited to an embodiment or an example that includes all configurations that have been described so far. Furthermore, a part of the configuration of one embodiment or one example can be replaced with a part of the configuration of another embodiment or another example. It is also possible to add the configuration of one embodiment or one example to the configuration of another embodiment or another example. In addition, a new embodiment or a new example of the present invention may be made by deleting a part of the configuration of each embodiment or each example, by adding another configuration to a part of the configuration of each embodiment or each example, or by replacing a part of configuration of each embodiment or each example with another configuration.

### Reference Signs List

- 1: battery can,
- 1a: opening,
- 1b: wide side surface,
- 1c: narrow side surface,
- 1d: bottom surface,
- 2: insulating protective film,
- 3: winding group,
- 5: gasket,
- 6: battery cover,
- 7: insulating plate,
- 9: solution injection port,
- 10: gas discharge valve,
- 11: solution injection plug,
- 12: negative electrode external terminal,
- 12a: negative electrode connection portion,
- 14: positive electrode external terminal,
- 14a: positive electrode connection portion,
- 21: negative electrode current collection plate base,
- 22: negative electrode side connection end portion,
- 23: negative electrode side opening hole,
- 24: negative electrode current collection plate,
- 26: negative electrode side through hole,
- 32: negative electrode,
- 32a: negative electrode foil,
- 32b: negative electrode active material layer,
- 32c: negative electrode foil exposed portion,
- 33: separator,
- 34: positive electrode,
- 34a: positive electrode foil,
- 34b: positive electrode active material layer,
- 34c: positive electrode foil exposed portion,
- 34d: positive electrode insulating layer,
- 35: separator,
- 41: positive electrode current collection plate base,
- 42: positive electrode side connection end portion,
- 43: positive electrode side opening hole,
- 44: positive electrode current collection plate,
- 46: positive electrode side through hole,
- 100: flat wound secondary battery (lithium ion secondary battery)

The contents of all publications, patents, and patent applications cited in the present specification are hereby incorporated by reference into the present specification.

## Claims

1. A lithium ion secondary battery comprising a positive electrode and a negative electrode, the positive electrode and the negative electrode being laminated upon each other,
wherein the positive electrode includes: a positive electrode foil; a positive electrode active material layer formed on a surface of the positive electrode foil; and a positive electrode insulating layer formed on a surface of the positive electrode active material layer, and
the positive electrode active material layer includes a positive electrode active material and a first nonaqueous binder; and
the positive electrode insulating layer includes an inorganic filler, a second nonaqueous binder, and a dispersant.

2. The lithium ion secondary battery according to claim 1,
wherein the dispersant includes at least one selected from a group of carboxylic acid compounds and phosphoric acid compounds.

3. The lithium ion secondary battery according to claim 1 or claim 2,
wherein the inorganic filler includes at least one selected from a group of alumina, boehmite, magnesia, zirconia, and titania.

4. The lithium ion secondary battery according to any of claim 1 to claim 3,
wherein the second nonaqueous binder includes at least one of a group of polyvinylidene fluoride (PVDF), polytetrafluoroethylene (PTFE), polyacrylic acid (PAA), and carboxymethylcellulose (CMC).

5. The lithium ion secondary battery according to any of claim 1 to claim 4,
wherein the negative electrode includes a negative electrode foil and a negative electrode active material layer formed on a surface of the negative electrode foil.

6. The lithium ion secondary battery according to claim 5,
wherein the negative electrode further includes a negative electrode insulating layer formed on a surface of the negative electrode active material layer.

7. The lithium ion secondary battery according to any of claim 1 to claim 6, the lithium ion battery further comprising a separator,
wherein the positive electrode and the negative electrode are laminated upon each other with the separator therebetween.

8. A method for producing a lithium ion secondary battery comprising the steps of:
preparing a positive electrode foil;
preparing a positive electrode active material layer slurry by mixing a positive electrode active material, a first nonaqueous binder, and a first nonaqueous solvent;
preparing a positive electrode insulating layer slurry by mixing an inorganic filler, a second nonaqueous binder, a dispersant, and a second nonaqueous solvent;
applying the positive electrode active material layer slurry to a surface of the positive electrode foil;
applying the positive electrode insulating layer slurry to a surface of the positive electrode active material layer slurry applied to the surface of the positive electrode foil; and
simultaneously drying the applied positive electrode active material layer slurry and the applied positive electrode insulating layer slurry.

9. The method for producing a lithium ion secondary battery according to claim 8,
wherein the dispersant includes at least one selected from a group of carboxylic acid compounds and phosphoric acid compounds.

10. The method for producing a lithium ion secondary battery according to claim 8 or claim 9,
wherein the inorganic filler includes at least one selected from a group of alumina, boehmite, magnesia, zirconia, and titania.

11. The method for producing a lithium ion secondary battery according to any of claim 8 to claim 10,
wherein the second nonaqueous binder includes at least one of a group of polyvinylidene fluoride (PVDF), polytetrafluoroethylene (PTFE), polyacrylic acid (PAA), and carboxymethylcellulose (CMC).
